# EUROPÄISCHE PATENTSCHRIFT

(11) **EP 1 477 660 B1**
(45) Veröffentlichungstag und Bekanntmachung des Hinweises auf die Patenterteilung: **25.10.2006**
(21) Anmeldenummer: 03101341.0
(22) Anmeldetag: 14.05.2003
(51) Int. Cl.: F02F 7/00, F16C 9/02

(54) **Lagerdeckelanordnung für ein Kurbelwellenlager**
Bearing cap arrangement for a crank shaft bearing
Agencement de chapeau de coussinet pour un palier de vilebrequin

(43) Veröffentlichungstag der Anmeldung: 17.11.2004
(73) Patentinhaber: Ford Global Technologies, LLC, A subsidary of Ford Motor Company, Dearborn, MI 48126 (US)
(72) Erfinder: Ladell, Godwin, 50767, Koeln (DE); Weiss, Edwin, 51647, Gummersbach (DE)
(74) Vertreter: Drömer, Hans-Carsten

(56) Entgegenhaltungen:
- DE-C- 3 837 834
- US-A- 4 520 770
- PATENT ABSTRACTS OF JAPAN vol. 2003, no. 03, 5. Mai 2003 (2003-05-05) & JP 2002 339801 A (HONDA MOTOR CO LTD), 27. November 2002 (2002-11-27)
- PATENT ABSTRACTS OF JAPAN vol. 010, no. 077 (M-464), 26. März 1986 (1986-03-26) & JP 60 219436 A (TOYOTA JIDOSHA KK), 2. November 1985 (1985-11-02)

## Beschreibung

Die Erfindung betrifft eine Lagerdeckel-Anordnung für ein Kurbelwellenlager, welche eine Anzahl von am Zylinderblock einer Brennkraftmaschine befestigbaren Lagerdeckeln zur Lagerung einer Kurbelwelle enthält. Ferner betrifft sie ein Kurbelwellenlager sowie eine Brennkraftmaschine mit einer derartigen Lagerdeckel-Anordnung.

Aus der US 4 520 770 ist ein Kurbelwellenlager für eine Brennkraftmaschine bekannt, bei welchem die Kurbelwelle in einer Reihe von axial beabstandeten Lagerdeckeln sowie zugehörigen Gegenlagern (Lagerstühlen) am Zylinderblock gelagert ist. Die Lagerdeckel bilden den unteren Teil eines Lagergehäuses und sind zur Erhöhung der Stabilität alle über zwei in Längsrichtung parallel zur Kurbelwelle verlaufende Lagerträger miteinander verbunden.

Bei einem derartigen bzw. einem vergleichbaren bekannten Kurbelwellenlager können Probleme aufgrund der unterschiedlichen thermischen Expansion verschiedener Materialien auftreten. So sind Kurbelwellen in der Regel aus Stahl beziehungsweise Gußeisen mit Kugelgraphit (nodular iron) und Zylinderblöcke aus Aluminium(-legierung) hergestellt. Dies führt dazu, daß sich bei höheren Motortemperaturen das Lagerspiel vergrößert. Um diesen Effekt zu reduzieren, wird das Material des Kurbelwellenlagers so ähnlich wie möglich zum Material der Kurbelwelle gewählt. So gelingt es durch Wahl von wärmebehandeltem Gußeisen mit Kugelgraphit (ADI: austempered ductile iron) für die Lagerdeckel-Anordnung, den thermischen Expansionskoeffizienten des Lagergehäuses um ca. 10% zu vermindern. Während dies positiv für die Kurbelwellenlagerung ist, bleibt jedoch in Längsrichtung die Differenz zwischen den thermischen Expansionskoeffizienten des Aluminium-Zylinderblockes einerseits und der verbundenen Lagerdeckel-Anordnung aus Stahl/Gußeisen mit Kugelgraphit andererseits bei großen Werten von typischerweise 30%.

Vor diesem Hintergrund war es eine Aufgabe der vorliegenden Erfindung, ein Kurbelwellenlager für eine Brennkraftmaschine bereitzustellen, welches bei guter Stabilität verringerte Probleme hinsichtlich seines Temperaturverhaltens zeigt.

Diese Aufgabe wird durch eine Lagerdeckel-Anordnung mit den Merkmalen des Anspruchs 1, durch ein Kurbelwellenlager mit den Merkmalen des Anspruchs 7 sowie durch eine Brennkraftmaschine mit den Merkmalen des Anspruchs 8 gelöst. Vorteilhafte Ausgestaltungen sind in den Unteransprüchen enthalten.

Die erfindungsgemäße Lagerdeckel-Anordnung für ein Kurbelwellenlager enthält eine Anzahl von am Zylinderblock einer Brennkraftmaschine befestigbaren Lagerdeckeln, auf denen eine Kurbelwelle in Zusammenwirkung mit Lagerstühlen am Zylinderblock gelagert werden kann. Die Lagerdeckel-Anordnung ist dadurch gekennzeichnet, daß die Lagerdeckel (nur) teilweise untereinander verbunden sind. Eine "teilweise" Verbindung bedeutet dabei, daß es unter den Lagerdeckeln mi n-destens zwei gibt, die miteinander verbunden sind, daß es jedoch mindestens auch zwei Lagerdeckel gibt, die nicht miteinander verbunden sind (wobei eine im endmontierten Zustand bestehende indirekte Verbindung über den Zylinderblock keine Verbindung der Lagerdeckel im vorliegenden Sinne ist). Mit anderen Worten können die Lagerdeckel in mindestens zwei Gruppen eingeteilt werden, wobei alle Lagerdeckel einer Gruppe untereinander verbunden sind, Lagerdeckel aus verschiedenen Gruppen jedoch nicht miteinander verbunden sind.

Durch die (nur) teilweise Verbindung der Lagerdeckel wird im Gegensatz zu den bekannten Anordnungen, bei denen alle Lagerdeckel miteinander verbunden sind, eine Entkopplung der Lagerdeckel in Längsrichtung erreicht. Die gesamte Lagerdeckel-Anordnung wirkt daher nicht mehr als ein zusammenhängendes Objekt, welches sich parallel zum Zylinderblock ausdehnt und daher für Spannungen in der Verbindung mit dem Zylinderblock sorgt. Vielmehr zerfällt die Lagerdeckel-Anordnung in untereinander unverbundene Gruppen von Lagerdeckeln, welche keine gemeinsamen Expansionskräfte in Längsrichtung aufbringen. Andererseits wird jedoch eine hinreichende Stabilität und Steifigkeit der Anordnung dadurch gewährleistet, daß zumindest ein Teil der Lagerdeckel miteinander verbunden ist. Diese Verbindung der Lagerdeckel untereinander kann zum Beispiel durch einen oder mehrere parallele Lagerträger geschehen (vgl. US 4 520 770). Vorzugsweise sind dabei benachbarte Lagerdeckel miteinander verbunden, das heißt es gibt keine Verbindungsbrücken über einen zwischengelegenen, unverbundenen Lagerdeckel hinweg. Solche auf benachbarte Lagerdeckel begrenzte Verbindungen stellen sicher, daß nur über verhältnismäßig kurze Längserstreckungen eine Kopplung der Lagerdeckel besteht, so daß sich keine zu großen thermischen Störkräfte in Längsrichtung aufbauen können.

Die Lagerdeckel-Anordnung besteht vorzugsweise aus wärmebehandeltem Gußeisen mit Kugelgraphit (ADI). Hierdurch wird eine große thermische Ähnlichkeit zu den gängigen Materialien von Kurbelwellen erreicht, so daß Lagerprobleme bei steigenden Motortemperaturen minimiert werden.

Gemäß einer speziellen Ausführungsform der Lagerdeckel-Anordnung, die insbesondere für einen Vierzylindermotor geeignet ist, weist die Anordnung fünf Lagerdeckel auf, welche nachfolgend in der Reihenfolge ihrer Anordnung als der "erste" bis "fünfte" Lagerdeckel bezeichnet werden. Die Lagerdeckel sind in drei untereinander unverbundene Gruppen unterteilt, wobei der mittlere Lagerdeckel allein eine der Gruppen bildet. Das heißt, daß (nur) zum einen der erste und der zweite Lagerdeckel sowie zum anderen der vierte und der fünfte Lagerdeckel miteinander verbunden sind.

Bei der vorstehend beschriebenen Anordnung ist der mittlere (dritte) Lagerdeckel vorzugsweise so eingerichtet, daß er am Zylindermantel und/oder an der Stirnseite des Zylinderblocks einer Brennkraftmaschine befestigbar ist. Eine Befestigung an der Stirnseite hat den Vorteil, daß die Geräuschentwicklung durch übertragene Anregungen minimiert wird.

Eine andere optionale Ausgestaltung einer Lagerdeckel-Anordnung weist ebenfalls fünf Lagerdeckel auf, die jedoch nur in zwei Gruppen unterteilt sind. Dabei sind der erste und der zweite Lagerdeckel einerseits sowie der dritte, vierte und fünfte Lagerdeckel andererseits miteinander verbunden. Durch die Unterteilung in nur zwei separate Gruppen ist die erreichbare Steifigkeit dieser Anordnung etwas größer als bei der in drei Gruppen unterteilten Anordnung.

Bei der vorstehend beschriebenen Ausführungsform der Lagerdeckel-Anordnung ist die Dreiergruppe bestehend aus dem dritten, vierten und fünften Lagerdeckel vorzugsweise (nur) im Bereich des vierten Lagerdeckels am Zylinderblock befestigbar. Zum Beispiel kann der vierte Lagerdeckel Bohrungen aufweisen, durch welche er mit Hilfe von Bolzen am Zylinderblock festgeschraubt werden kann. Durch die nur mittige Befestigung am vierten Lagerdeckel kann die Auswirkung von thermischen Expansionen der Dreiergruppe von Lagerdeckeln auf den Zylinderblock minimiert werden.

Die Erfindung betrifft ferner ein Kurbelwellenlager für eine Brennkraftmaschine, welches dadurch gekennzeichnet ist, daß es eine Lagerdeckel-Anordnung der vorstehend beschriebenen Art enthält. Das heißt, daß die Lagerdeckel der Lagerdeckel-Anordnung nur teilweise miteinander verbunden sind.

Ferner betrifft die Erfindung eine Brennkraftmaschine mit einem Zylinderblock und einer Kurbelwelle, wobei die Brennkraftmaschine ein Kurbelwellenlager der vorstehend beschriebenen Art beziehungsweise eine Lagerdeckel-Anordnung der oben erläuterten Art enthält. Vorzugsweise besteht der Zylinderblock der Brennkraftmaschine aus Aluminium oder einer Aluminium-Legierung. Die Kurbelwelle der Brennkraftmaschine besteht vorzugsweise aus Stahl oder Gußeisen mit Kugelgraphit. Die genannten Materialien weisen jeweils optimale Eigenschaften für die Zwecke des Zylinderblockes beziehungsweise der Kurbelwelle auf. Das mit den Materialien verbundene unterschiedliche thermische Expansionsverhalten wird hinsichtlich der Längsausdehnung durch die Verwendung einer erfindungsgemäßen Lagerdeckel-Anordnung mit nur teilweise miteinander verbundenen Lagerdeckeln kompensiert.

Im Folgenden wird die Erfindung mit Hilfe der Figuren beispielhaft näher erläutert.

Es zeigen:
- Fig. 1: schematisch einen Längsschnitt durch eine Brennkraftmaschine mit einem Zylinderblock und einer ersten Ausgestaltungsform einer erfindungsgemäßen Lagerdeckel-Anordnung und
- Fig. 2: eine zweite Ausgestaltungsform einer erfindungsgemäßen Lagerdeckel-Anordnung.

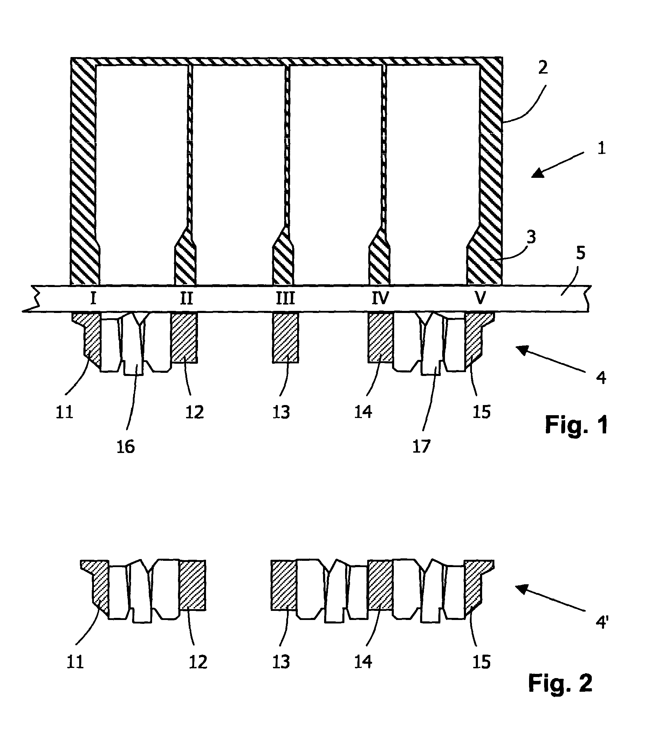

Figur 1 zeigt einen schematischen Längsschnitt durch eine Brennkraftmaschine 1, wobei ein Zylinderblock 2 mit vier Zylindern und einer darunter befindlichen Lagerdeckel-Anordnung 4 zu erkennen ist. Die fünf Lagerdeckel 11, 12, 13, 14 und 15 der Lagerdeckel-Anordnung bilden zusammen mit fünf Lagerstühlen 3 am Zylinderblock 2 fünf Hauptlager I, II, III, IV und V für eine Kurbelwelle 5. Die Gesamtheit der Hauptlager I-V wird als Kurbelwellenlager bezeichnet.

Während der Zylinderblock 2 vorzugsweise aus Aluminium oder einer Aluminium-Legierung besteht, werden Kurbelwellen typischerweise aus Stahl beziehungsweise Gußeisen mit Kugelgraphit hergestellt. Um Veränderungen des Lagerspiels der Kurbelwelle 5 bei höheren Motortemperaturen durch unterschiedliche Ausdehnungskoeffizienten möglichst gering zu halten, werden die Lagerdeckel 11-15 vorzugsweise aus einem ähnlichen oder aus demselben Material wie die Kurbelwelle hergestellt, z.B. aus wärmebehandeltem Gußeisen mit Kugelgraphit (ADI). Bei herkömmlichen Kurbelwellenlagern, bei denen alle Lagerdeckel 11-15 miteinander über mindestens einen Lagerträger ("bearing beam") verbunden sind, können dann jedoch Probleme durch die unterschiedliche Längsausdehnung des Zylinderblockes 2 einerseits und der Lagerdeckel-Anordnung andererseits entstehen.

Um derartige Expansionsprobleme zu minimieren und gleichzeitig eine hohe Stabilität der Lagerdeckel-Anordnung 4 zu gewährleisten, wird erfindungsgemäß vorgeschlagen, die Lagerdeckel-Anordnung 4 in untereinander unverbundene Gruppen von innerhalb der Gruppe verbundenen Lagerdeckeln zu unterteilen. pen von innerhalb der Gruppe verbundenen Lagerdeckeln zu unterteilen. Diesbezüglich zeigt Figur 1 eine Ausführungsform der Lagerdeckel-Anordnung 4 mit drei Gruppen von Lagerdeckeln, wobei die ersten beiden Lagerdeckel 11 und 12 über einen Lagerträger 16 sowie die letzten beiden Lagerdeckel 14 und 15 über einen Lagerträger 17 miteinander verbunden sind, während der mittlere Lagerdeckel 13 separat angeordnet ist. Der mittlere Lagerdeckel 13 kann zum Beispiel über Bolzenquerverbindungen mit dem Mantel des Zylinderblocks 2 verbunden sein. Um durch die Übertragung von Anregungen erzeugte Geräusche zu minimieren, kann der mittlere Lagerdeckel 13 auch separat an einer Stirnseite des Zylinderblocks 2 befestigt sein.

Figur 2 zeigt eine alternative Lagerdeckel-Anordnung 4', bei welcher die Lagerdeckel in nur zwei untereinander unverbundene Gruppen unterteilt sind. Speziell sind die ersten beiden Lagerdeckel 11 und 12 miteinander verbunden sowie die restlichen drei Lagerdeckel 13, 14 und 15. Um Störeffekte durch eine thermische Längsexpansion der Dreiergruppe 13, 14 und 15 zu minimieren, wird diese Gruppe vorzugsweise (nur) am mittleren Lagerdeckel 14 durch Dübel beziehungsweise Paßstifte mit dem Zylinderblock verbunden.

## Patentansprüche

1. Lagerdeckel-Anordnung (4, 4') für ein Kurbelwellenlager, enthaltend eine Anzahl von am Zylinderblock (2) einer Brennkraftmaschine befestigbaren Lagerdeckeln (11-15) zur Lagerung einer Kurbelwelle (5),
**dadurch gekennzeichnet, daß**
die Lagerdeckel (11-15) teilweise untereinander verbunden sind.

2. Lagerdeckel-Anordnung nach Anspruch 1,
**dadurch gekennzeichnet, daß**
diese aus Gußeisen mit Kugelgraphit besteht.

3. Lagerdeckel-Anordnung nach einem der Ansprüche 1 oder 2,
**dadurch gekennzeichnet, daß**
diese fünf Lagerdeckel (11-15) enthält, von denen nur der erste (11) und der zweite (12) sowie der vierte (14) und der fünfte (15) miteinander verbunden sind.

4. Lagerdeckel-Anordnung nach Anspruch 3,
**dadurch gekennzeichnet, daß**
der mittlere Lagerdeckel (13) am Zylindermantel und/oder an der Stirnseite eines Zylinderblockes (2) befestigbar ist.

5. Lagerdeckel-Anordnung nach Anspruch 1 oder 2,
**dadurch gekennzeichnet, daß**
diese fünf Lagerdeckel (11-15) enthält, von denen nur der erste (11) und der zweite (12) sowie der dritte (13), vierte (14) und fünfte (15) miteinander verbunden sind.

6. Lagerdeckel-Anordnung nach Anspruch 5,
**dadurch gekennzeichnet, daß**
die Gruppe bestehend aus dem dritten, vierten und fünften Lagerdeckel (11, 12, 13) im Bereich des vierten Lagerdeckels (14) an einem Zylinderblock (2) befestigbar ist.

7. Kurbelwellenlager für eine Brennkraftmaschine,
**dadurch gekennzeichnet, daß**
dieses eine Lagerdeckel-Anordnung (4, 4') nach mindestens einem der Ansprüche 1 bis 6 enthält.

8. Brennkraftmaschine mit einem Zylinderblock (2) und einer Kurbelwelle (5), **gekennzeichnet durch** ein Kurbelwellenlager nach Anspruch 7.

9. Brennkraftmaschine nach Anspruch 8,
**dadurch gekennzeichnet, daß**
der Zylinderblock (2) aus Aluminium oder einer Aluminium-Legierung besteht.

10. Brennkraftmaschine nach Anspruch 8 oder 9,
**dadurch gekennzeichnet, daß**
die Kurbelwelle (5) aus Stahl oder Gußeisen mit Kugelgraphit besteht.

## Claims

1. Bearing cover arrangement (4, 4') for a crankshaft bearing, which includes a number of bearing covers (11-15) which can be secured to the cylinder block (2) of an internal combustion engine, in order to bear a crankshaft (5),
**characterized in that**
the bearing covers (11-15) are in some cases connected to one another.

2. Bearing cover arrangement according to Claim 1,
**characterized in that**
it consists of nodular cast iron.

3. Bearing cover arrangement according to either of Claims 1 or 2,
**characterized in that**
it includes five bearing covers (11-15), of which only the first (11) and second (12), and the fourth (14) and fifth (15), are connected to one another.

4. Bearing cover arrangement according to Claim 3,
**characterized in that**
the middle bearing cover (13) can be secured to the cylinder jacket and/or to the end side of a cylinder block (2).

5. Bearing cover arrangement according to Claim 1 or 2,
**characterized in that**
it includes five bearing covers (11-15), of which only the first (11) and second (12), and the third (13), fourth (14) and fifth (15), are connected to one another.

6. Bearing cover arrangement according to Claim 5,
**characterized in that**
the group comprising the third, fourth and fifth bearing covers (11, 12, 13) can be secured to a cylinder block (2) in the region of the fourth bearing cover (14).

7. Crankshaft bearing for an internal combustion engine,
**characterized in that**
it includes a bearing cover arrangement (4, 4') according to at least one of Claims 1 to 6.

8. Internal combustion engine having a cylinder block (2) and a crankshaft (5), **characterized by** a crankshaft bearing according to Claim 7.

9. Internal combustion engine according to Claim 8,
**characterized in that**
the cylinder block (2) consists of aluminium or an aluminium alloy.

10. Internal combustion engine according to Claim 8 or 9,
**characterized in that**
the crankshaft (5) consists of steel or nodular cast iron.

## Revendications

1. Agencement de chapeaux de coussinet (4, 4') pour un palier de vilebrequin, contenant un certain nombre de chapeaux de coussinets (11-15) pouvant être fixés sur le bloc-cylindres (2) d'un moteur à combustion interne, pour le support d'un vilebrequin (5),
**caractérisé en ce que**
les chapeaux de coussinets (11-15) sont partiellement connectés les uns aux autres.

2. Agencement de chapeaux de coussinet selon la revendication 1,
**caractérisé en ce que**
celui-ci se compose de fonte de moulage à graphite sphéroïdal.

3. Agencement de chapeaux de coussinet selon l'une quelconque des revendications 1 ou 2,
**caractérisé en ce que**
celui-ci contient cinq chapeaux de coussinets (11-15) dont seulement le premier (11) et le deuxième (12) ainsi que le quatrième (14) et le cinquième (15) sont connectés les uns aux autres.

4. Agencement de chapeaux de coussinet selon la revendication 3,
**caractérisé en ce que**
le chapeau de coussinet intermédiaire (13) peut être fixé sur une enveloppe de cylindre et/ou sur le côté frontal d'un bloc-cylindres (2).

5. Agencement de chapeaux de coussinet selon la revendication 1 ou 2,
**caractérisé en ce que**
celui-ci contient cinq chapeaux de coussinets (11-15) dont seulement le premier (11) et le deuxième (12) ainsi que le troisième (13), le quatrième (14) et le cinquième (15) sont connectés les uns aux autres.

6. Agencement de chapeaux de coussinet selon la revendication 5,
**caractérisé en ce que**
le groupe constitué du troisième, du quatrième et du cinquième chapeaux de coussinet (11, 12, 13) peut être fixé dans la région du quatrième chapeau de coussinet (14) à un bloc-cylindres (2).

7. Coussinet de vilebrequin pour un moteur à combustion interne,
**caractérisé en ce que**
celui-ci contient un agencement de chapeaux de coussinet (4, 4') selon au moins l'une quelconque des revendications 1 à 6.

8. Moteur à combustion interne comprenant un bloc-cylindres (2) et un vilebrequin (5), **caractérisé par** un coussinet de vilebrequin selon la revendication 7.

9. Moteur à combustion interne selon la revendication 8,
**caractérisé en ce que**
le bloc-cylindres (2) se compose d'aluminium ou d'un alliage d'aluminium.

10. Moteur à combustion interne selon la revendication 8 ou 9,
**caractérisé en ce que**
le vilebrequin (5) se compose d'acier ou de fonte de moulage à graphite sphéroïdal.
